(19) Europäisches Patentamt
European Patent Office
Office européen des brevets

(11)  **EP 2 646 248 B1**

(12)  **EUROPEAN PATENT SPECIFICATION**

(45) Date of publication and mention
of the grant of the patent:
**26.02.2020  Bulletin 2020/09**

(21) Application number: **11845124.4**

(22) Date of filing: **09.11.2011**

(51) Int Cl.:
*B29C 48/00* [(2019.01)]     *B29C 48/88* [(2019.01)]

(86) International application number:
**PCT/US2011/059963**

(87) International publication number:
**WO 2012/074702 (07.06.2012 Gazette 2012/23)**

(54)  **SYSTEMS AND METHOD FOR DIRECT EMBOSSMENT OF A POLYMER MELT SHEET**

SYSTEME UND VERFAHREN ZUR DIREKTPRÄGUNG EINER POLYMERSCHMELZFOLIE

SYSTÈMES ET PROCÉDÉ PERMETTANT UN EMBOSSAGE DIRECT D'UNE FEUILLE DE POLYMÈRE À L'ÉTAT FONDU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2010  US 418275 P
22.03.2011  US 201113069121**

(43) Date of publication of application:
**09.10.2013  Bulletin 2013/41**

(73) Proprietor: **Solutia Inc.
St. Louis, Missouri 63141 (US)**

(72) Inventors:
• **SPANGLER, Lora, Lee**
**Belchertown, MA 01007 (US)**
• **YACOVONE, Vincent**
**Springfield, MA 01128 (US)**
• **KARAGIANNIS, Aristotelis**
**Amherst, MA 01002 (US)**
• **MATIS, Gary**
**Wilbraham, MA 01095 (US)**
• **NAGARAJANC, Pratapkumar**
**Greer, SC 29650 (US)**
• **SMITH, Andrew, Neil**
**East Longmeadow, MA 01028 (US)**
• **SZYDLOWSKI, Witold**
**Wilbraham, MA 01095 (US)**
• **URBAN, Richard, F.**
**Chesterfield, MI 48047 (US)**
• **FENG, Wenlai**
**Perrysburg, OH 43551 (US)**

(74) Representative: **Best, Michael et al
Lederer & Keller
Patentanwälte Partnerschaft mbB
Unsöldstrasse 2
80538 München (DE)**

(56) References cited:
**US-A- 4 359 442       US-A- 5 466 317
US-A- 6 077 373       US-A- 6 096 247
US-A1- 2001 008 701   US-A1- 2006 141 212
US-A1- 2008 017 241   US-A1- 2008 157 426
US-A1- 2008 268 204**

**Description**

CROSS REFERENCE TO RELATED APPLICATION(S)

This Application claims the benefit of and priority to United States Provisional Patent Application Serial No. 61/418,275, filed November 30, 2010 and United States Utility Patent Application Serial No. 13/069,121, filed March 22, 2011.

BACKGROUND OF THE INVENTION

1. Field of the Invention

This disclosure is related to the field of polymer interlayers for multiple layer glass panels and multiple layer glass panels having at least one polymer interlayer sheet. Specifically, this disclosure is related to the field of systems, methods and apparatuses for embossing the polymer interlayer sheets of multiple layer glass panels immediately after the polymer interlayer sheets have left the extrusion die while they are polymer melt sheets.

2. Description of Related Art

Generally, multiple layer glass panels are comprised of two sheets of glass, or other applicable substrates, with a polymer interlayer sheet or sheets sandwiched there between. The following offers a simplified description of the manner in which multiple layer glass panels are generally produced. First, at least one polymer interlayer sheet is placed between two substrates to create an assembly. It is not uncommon for multiple polymer interlayer sheets to be placed within the two substrates creating a multiple layer glass panel with multiple polymer interlayers. Then, air is removed from the assembly by an applicable process or method known to one of skill in the art; e.g., through nip rollers, vacuum bag or another deairing mechanism. Following the removal of the air from the assembly, the constituent parts of the assembly are preliminarily press-bonded together by a method known to one of ordinary skill in the art. In a last step, in order to form a final unitary structure, this preliminary bonding is rendered more permanent by a lamination process known to one of ordinary skill in the art such as, but not limited to, autoclaving. Amongst other applications, the resultant laminate glass panels from this process are utilized in architectural windows and in the windows of motor vehicles and airplanes.

Generally, two (2) common problems are encountered in the art of manufacturing multiple layer glass panels: blocking and de-gassing. Blocking is generally known to those of skill in the art as the sticking of polymer interlayers to each other. Blocking can be a problem during the manufacturing, storage and distribution of polymer interlayer sheets, where it is not uncommon for the polymer interlayer sheets (which in some processes are stored in rolls) to come into contact with each other. Blocking can also pose a problem post-manufacturing, namely after the point-of-sale of the polymer interlayer sheets. It is not uncommon in the industries in which polymer interlayer sheets and multiple layer glass panels are used (e.g., architectural, automotive and aeronautical) for the polymer interlayer sheets to be cut into blanks and placed in stacks before insertion into a panel or other glazing device. If a polymer interlayer is susceptible to blocking, it can be difficult, if not impossible, to separate the polymer interlayer sheets. For example, it may be difficult to separate the sheets or blanks back into individual pieces without deforming or stretching the sheet or blank once they are stacked.

De-gassing is the removal of the presence of gas or air in a multiple layer glass panel. Gas trapped in a multiple layer glass panel can have a negative or degenerative effect on the optical clarity and adhesion of the panel. During the manufacturing process of laminated multiple layer glass panel constructs, gases can become trapped in the interstitial spaces between the substrates and the one or more polymer interlayers. Generally, this trapped air is removed in the glazing or panel manufacturing process by vacuum de-airing the construct, nipping the assembly between a pair of rollers or by some other method known to those of skill in the art. However, these technologies are not always effective in removing all of the air trapped in the interstitial spaces between the substrates, especially when the polymer interlayer sheet has a smooth surface.

Generally, the presence of a gas in the interstitial spaces of a multiple layer glass panel takes the form of bubbles in the polymer interlayer sheet(s) or pockets of gas between the polymer interlayer sheet(s) and the substrates. These bubbles and gaseous pockets are undesirable and problematic where the end-product multiple layer glass panel will be used in an application where optical quality is important. Thus, the creation of a solid-phase interlayer essentially free of any gaseous pockets or bubbles is paramount in the multiple layer glass panel manufacturing process.

Not only is it important to create a multiple layer glass panel free of gaseous pockets and bubbles immediately after manufacturing, but permanency is also important. It is not an uncommon defect in the art of multiple layer glass panels for dissolved gases to appear (e.g., for bubbles to form) in the panel over time, especially at elevated temperatures and under certain weather conditions and sunlight exposure. Thus, it is also important that, in addition to leaving the laminate production line free from any bubbles or gaseous cavities, that the multiple layer glass panel remain gas-free for a substantial period of time under end-use conditions to fulfill its commercial role.

In order to facilitate the deairing process and as a measure to prevent blocking, it has become common in the art of multiple layer glass panel manufacturing to emboss one or both sides of the polymer interlayer(s), thereby creating minute raised and depressed portions on the surface of the polymer interlayer. Embossment of the polymer interlayer has been shown to be effective in reducing the occurrence of blocking and in enhancing the deairing process.

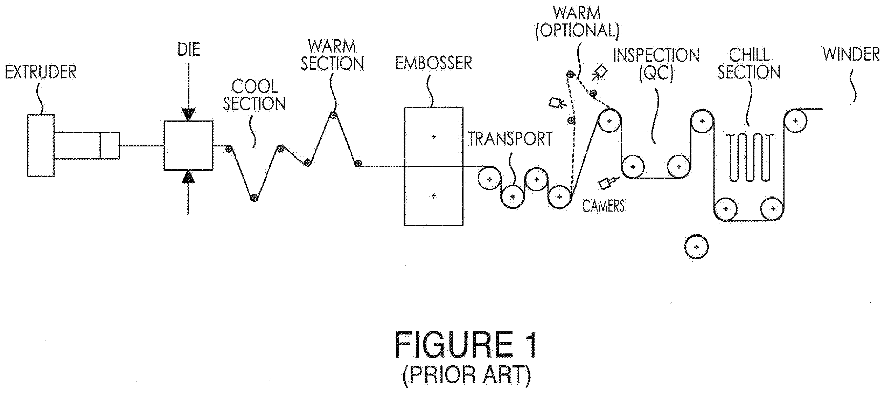

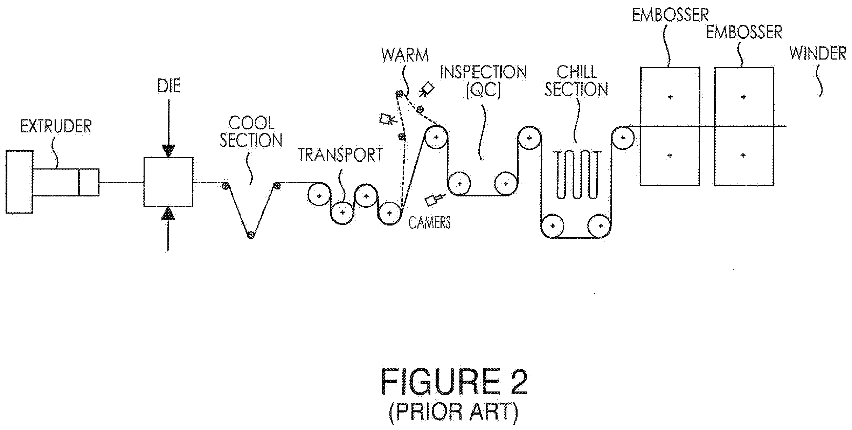

While certain embossing methods and techniques in the manufacture of multiple layer glass panels are known, there are several problems with the embossing processes previously utilized in the art (referred to herein as "Conventional Processes"). The first of these problems is the general inefficiency of the Conventional Processes. Generally, in the Conventional Processes, the polymer interlayer sheet was embossed via embossing rollers. In order to prevent the polymer interlayer from sticking to the embossing rollers and disfigurement of the polymer interlayer sheet, the polymer interlayer was usually cooled prior to embossing it with the embossing rollers. The polymer interlayer sheet was not embossed immediately after it left the extrusion die while it was still a polymer melt. Because of the tendency of the polymer melt to stick to the embossing rollers, extra cooling steps were usually carried out before embossing. Specifically, in the Conventional Processes, the polymer sheet was cooled from a polymer sheet melt to form a polymer interlayer sheet, and then the surface of the polymer interlayer sheet was reheated, before the embossing step. Practically, in some methods, this necessitated that the polymer interlayer be fed through multiple sets of rollers in additional production steps before it could be embossed. FIGs. 1 and 2 depict two different Conventional Processes each which utilize multiple cooling, reheating and embossing steps. These additional production steps could significantly add to the costs, energy intake and the overall space required for multiple layer glass panel production.

For example, in Gen, et al. (U.S. Pat. No. 4,671,913) (hereinafter referred to as "Gen"), after the polymer interlayer leaves the extrusion die, it is fed between a pair of cooled rollers to be cooled and set into a polymer interlayer sheet. Only after the polymer interlayer sheet has been cooled to a specific temperature is the surface layer of the polymer interlayer sheet reheated and subjected to embossing. Further, in Holger (EP 1 646 488) (hereinafter referred to as "Holger"), the polymer interlayer is cooled to a temperature of about 100°C to 160°C via single or multiple sets of cooling rollers prior to embossing. Moreover, US 2008/0017241 A1 discloses a thermoplastic film or sheet having a thickness of about 1 mil (0.026 mm) to about 20 mils (0.51 mm) containing a surface embossed layer.

Often, if both sides of a polymer were embossed in the Conventional Processes, the embossing was generally performed in separate successive steps with separate sets of embossing rollers by running the polymer interlayer sheet between two sets of embossing rollers. Thus, embossing in some Conventional Processes was performed in multiple separate successive stages with different sets of rollers, with each side of the polymer interlayer sheet being embossed in one of the successive stages. FIG. 2 provides a diagram of such a multi-step embossing process.

This multi-stage embossing process is generally required in some Conventional Processes because of the necessity of cooling the polymer interlayer sheet from a melt prior to embossing. As noted previously, in some Conventional Processes, the polymer interlayer sheet is not embossed directly after it leaves the extrusion die while it is still a melt because the molten polymer will stick to the embossing rolls causing a mess and degrading the integrity of the polymer interlayer sheet, rendering it unusable. Accordingly, the polymer interlayer sheet is cooled prior to embossing. However, a completely cooled polymer interlayer sheet is difficult, if not impossible, to emboss, therefore, in some Conventional Processes, after the polymer melt is cooled to a polymer interlayer sheet, the surface of the interlayer sheet must be reheated with the embossing roller (or by some other technique) at the time of embossing.

In some Conventional Processes using two embossing steps, the heated embossing roller is combined with a non-embossing roller, such as a rubber roller, which offers greater and more consistent pressure (higher contact force) to the embossing roller system than can be achieved if two metal (e.g., steel) embossing rollers are utilized simultaneously. Thus, if both sides of the polymer interlayer sheet are to be embossed in the Conventional Processes, usually at least two sets of rollers (each set being comprised of an embossing roller and a rubber roller) are utilized. Examples of this multi-stage, multi-set embossment procedure can be found in both Gen and Holger and are depicted in FIG. 2.

Summarized, the previously utilized embossing processes in the art of multiple layer glass panel manufacturing were usually performed after cooling the polymer interlayer sheet from a melt into a polymer interlayer sheet (i.e., there were usually multiple cooling and reheating steps-the polymer interlayer left the extrusion die as a polymer melt sheet, the polymer melt sheet was cooled to form a polymer interlayer sheet, the surface of the polymer interlayer sheet was reheated and the reheated surface of the polymer interlayer sheet was embossed), embossing generally occurred after a polymer interlayer sheet had been formed (i.e., the polymer melt that left the extrusion die was not embossed, rather the polymer melt was first cooled to form a polymer interlayer sheet), and a multi-stage, multi-set embossing roller set-up generally was required if both sides of the polymer interlayer sheet were to be embossed. These properties of the Conventional Processes resulted in increased energy costs for the entire manufacturing system (e.g., the energy costs associated with the cooling of the polymer interlayer sheet and the energy costs associated with the extra steps in the manufacturing process), larger space and footprint requirements for the manufacturing system (more steps require more space), decreased efficiency and overall output due to the longer manufacturing process, and higher investment costs for the process as a whole.

SUMMARY OF THE INVENTION

Because of these and other problems in the art, the invention provides an embossed polymer interlayer sheet comprising: a first side; a second side opposing the first side; and an embossed surface on at least one of the sides, wherein the embossed polymer interlayer sheet has a surface roughness Rz of 10 to 90 microns, a permanence of greater than 95% when tested at 100°C for five minutes and an embossed surface retention of greater than 70% when tested at 140°C for five minutes and wherein the embossed polymer interlayer sheet is comprised of plasticized polyvinyl butyral. In certain embodiments, the embossed polymer interlayer sheet will also have a stack sticking peel force of less than 50 g/cm. In certain embodiments, the embossed polymer interlayer sheet will be further comprised of one or more additives chosen from the group consisting of: plasticizers, dyes, pigments, stabilizers, antioxidants, anti-blocking agents, flame retardants, IR absorbers, processing aides, flow enhancing additives, lubricants, impact modifiers, nucleating agents, thermal stabilizers, UV absorbers, UV stabilizers, dispersants, surfactants, chelating agents, coupling agents, adhesives, primers, reinforcement additives, and fillers.

The embossed polymer interlayer sheet can comprised of multiple polymer layers between said first side and said second side, creating an embossed multi-layer polymer interlayer. In one embodiment, this embossed multi-layer polymer interlayer sheet will have a mottle value of less than 1.5 as measured by CMA. In another embodiment, this embossed multi-layer polymer interlayer sheet will have a mottle value of less than 2.5 as measured by CMA.

Also disclosed herein is an embossed polymer interlayer sheet with a surface roughness Rz of 10 to 90 microns, a permanence of greater than 95% when tested at 100°C for five minutes and an embossed surface retention of greater than 70% when tested at 140°C for five minutes, with the embossed polymer interlayer sheet being produced by a process which comprises the steps of: extruding a polymer melt sheet; after the extruding, embossing said polymer melt sheet in a single embossing stage; after the embossing, cooling said polymer melt sheet to form a polymer interlayer sheet.

A method for generating an embossed polymer interlayer sheet is also disclosed. This method comprises the steps of: extruding a polymer melt sheet; after the extruding, embossing the polymer melt sheet in a single embossing stage and after the embossing, cooling the polymer melt sheet to form a polymer interlayer sheet, wherein, after the cooling, the polymer interlayer sheet retains substantially all of the embossing applied to the polymer melt sheet.

In one embodiment of this method, the temperature of the polymer melt sheet (wherein the polymer melt sheet is comprised of plasticized PVB) will be within the range of about 125°C to 220°C (preferably about 160°C to 220°C) during the embossing. In another embodiment of the method, the polymer interlayer sheet has a surface roughness Rz of 10 to 90 microns, a permanence of greater than 95% when tested at 100°C for five minutes, an embossed retention of greater than 70% when tested at 140°C for five minutes and/or a stack sticking peel force of less than 50 g/cm.

In this method, in one embodiment, both sides of the polymer melt sheet can be embossed simultaneously in a single embossing stage with a set of embossing rollers.

Also disclosed herein is an apparatus for embossing a polymer melt sheet, the apparatus comprising: an extrusion device for extruding a polymer melt sheet; a set of embossing rollers; and a cooling device for cooling the polymer melt sheet into a polymer interlayer sheet; wherein after being extruded from the extrusion device, the polymer melt sheet is fed through the set of embossing rollers prior to being cooled by the cooling device.

BRIEF DESCRIPTION OF THE DRAWINGS

FIG. 1 provides a diagram of an embodiment of a prior art extrusion and embossing process for polymer interlayer sheets.

FIG. 2 provides a diagram of an embodiment of a prior art extrusion and embossing process for polymer interlayer sheets.

FIG. 3 provides a diagram of an embodiment of an extrusion process for the creation of a polymer interlayer sheet and a diagram of the Disclosed Process.

FIG. 4 provides a graphical representation of how Rz is measured in accordance with DIN ES ISO-4287 of the International Organization for Standardization and ASME B46.1 of the American Society of Mechanical Engineers.

FIG. 5 provides a representation of the Rz and Rsm values for a sawtooth engraving pattern.

FIG. 6 provides a graphical depiction of a comparison of the mottle values as measured by the CMA for various samples of polymer interlayer sheets embossed by the Disclosed Process and the Conventional Process.

FIG. 7 provides a graphical depiction of the embossed retention values of various samples of polymer interlayer sheets embossed by the Disclosed Process and the Conventional Process over various testing conditions.

DESCRIPTION OF THE PREFERRED EMBODIMENT(S)

Described herein, among other things, is a continuous, online, single-stage embossing station comprised of two (2) temperature-controlled engraved rollers which is located after the extrusion die and before a cooling step in the manufacturing process for polymer interlayer sheets and allows for simultaneous embossment of both sides of a polymer interlayer sheet.

As an initial matter, it is contemplated that polymer interlayer sheets as described herein may be produced by any suitable process known to one of ordinary skill in the art of producing polymer interlayer sheets that are capable of being embossed. For example, it is contemplated that the polymer interlayer sheets may be formed through dipcoating, solution casting, compression molding, injection molding, melt extrusion, melt blowing or any other procedures for the production and manufacturing of a polymer interlayer sheet known to those of ordinary skill in the art. Further, in embodiments where multiple polymer interlayers are utilized, it is contemplated that these multiple polymer interlayers may be formed through coextrusion, blown film, dip coating, solution coating, blade, paddle, air-knife, printing, powder coating, spraying or other processes known to those of ordinary skill in the art. While all methods for the production of polymer interlayer sheets known to one of ordinary skill in the art are contemplated as possible methods for producing the polymer interlayer sheets embossed in the methods described herein, this application will focus on polymer interlayer sheets produced through the extrusion and coextrusion processes.

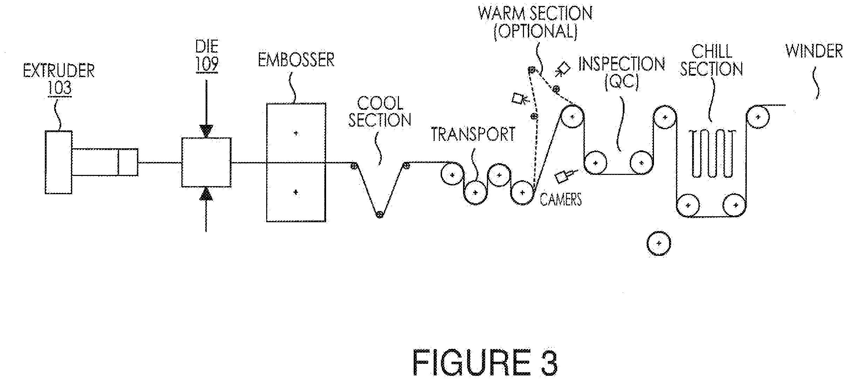

In order to facilitate a more comprehensive understanding of the embossing methods disclosed herein, this application summarizes the extrusion process by which, in certain embodiments, it is contemplated that the polymer melt sheet to be embossed will be formed. FIG. 3 depicts a graphical representation of a general summary of the polymer extrusion process along with the disclosed embossing process of this application. Generally, in its most basic sense, extrusion is a process used to create objects of a fixed cross-sectional profile. This is accomplished by pushing or drawing a material through a die of the desired cross-section for the end product.

Generally, in the extrusion process, thermoplastic raw material is fed into an extruder device (103). Examples of the thermoplastic resins used to form polymer interlayers include, but are not limited to, polyvinyl butyral (PVB), polyurethane (PU), poly(ethylene-co-vinyl acetate) (EVA), poly(vinyl)acetal (PVA), polyvinylchloride (PVC), polyethylenes, polyolefins, ethylene acrylate ester copolymers, poly(ethylene-co-butyl acrylate), silicone elastomers, epoxy resins and any acid copolymers and ionomers derived from any of the foregoing possible thermoplastic resins, wherein the embossed polymer interlayer sheet according to the invention is comprised of plasticized polyvinyl bytural.

Additives such as colorants and UV inhibitors (in liquid or pellet form) are often used and can be mixed into the thermoplastic resin prior to arriving in the extruder device (103). These additives are incorporated into the thermoplastic polymer resin, and by extension the resultant polymer interlayer sheet, to enhance certain properties of the polymer interlayer sheet and its performance in the final multiple layer glass panel product. Contemplated additives include, but are not limited to, plasticizers, dyes, pigments, stabilizers, antioxidants, anti-blocking agents, flame retardants, IR absorbers, processing aides, flow enhancing additives, lubricants, impact modifiers, nucleating agents, thermal stabilizers, UV absorbers, UV stabilizers, dispersants, surfactants, chelating agents, coupling agents, adhesives, primers, reinforcement additives, and fillers, among other additives known to those of skill in the art.

In the extruder device (103), the particles of the thermoplastic raw material are melted and mixed, resulting in a molten thermoplastic resin that is generally uniform in temperature and composition. Once the molten thermoplastic raw material reaches the end of the extruder device (103) the molten thermoplastic resin is forced into the extruder die (109). The extruder die (109) is the component of the thermoplastic extrusion process which gives the final polymer interlayer sheet product its profile. Generally, the die (109) is designed such that the molten thermoplastic resin evenly flows from a cylindrical profile coming out of the die (109) and into the product's end profile shape. A plurality of shapes can be imparted to the end polymer interlayer sheet by the die (109) so long as a continuous profile is present.

Notably, for the purposes of this application, the polymer interlayer at the state after the extrusion die (109) forms the thermoplastic resin into a continuous profile will be referred to as a "polymer melt sheet." At this stage in the process, the extrusion die (109) has imparted a particular profile shape to the thermoplastic resin, thus creating the polymer melt sheet. The polymer melt sheet retains this shape, but is still comprised of molten thermoplastic resin at raised temperatures. The polymer melt sheet is highly viscous throughout and in a generally molten state. In the polymer melt sheet, the thermoplastic resin has not yet been cooled to a temperature at which the sheet generally completely "sets." Thus, after the polymer melt sheet leaves the extrusion die (109), generally the next step in the Conventional Processes (as seen in FIGs. 1 and 2) is to cool the polymer melt sheet with a cooling device. Cooling devices utilized in the previously employed processes include, but are not limited to, spray jets, fans, cooling baths, and cooling rollers. The cooling step functions to set the polymer melt sheet into a polymer interlayer sheet of a generally uniform non-molten cooled temperature. In contrast to the polymer melt sheet, this polymer interlayer sheet is not in a molten state. Rather, it is the set final-form cooled polymer interlayer sheet product. For the purposes of this application, this set and cooled polymer interlayer will be referred to as the "polymer interlayer sheet." Generally, the thickness, or gauge, of the polymer interlayer sheet will be in a range from about 0.1 to about 3.0 millimeters.

In some embodiments of the extrusion process, a coextrusion process may be utilized. Coextrusion is a process by which multiple layers of polymer material are extruded simultaneously. Generally, this type of extrusion utilizes two or more extruders to melt and deliver a steady volume throughput of different thermoplastic melts of different viscosities or other properties through a single extrusion die into the desired final form. The thickness of the multiple polymer layers leaving the extrusion die in the coextrusion process can generally be controlled by adjustment of the relative mass or volume of the melt through the extrusion die and by the sizes of the individual extruders processing each molten thermoplastic resin material.

The terms "polymer melt sheet" or "polymer interlayer sheet" as used herein, may designate a single-layer sheet or a multi-layer sheet. A multi-layer sheet may compromise multiple separately extruded layers or may comprise multiple co-extruded layers. Any multi-layer sheet utilized can be varied by manipulating the composition, thickness, or positioning of the layers and the like. For example, in one tri-layer polymer sheet, the two surface layers may comprise one of the thermoplastic materials described above to enhance the adhesion, optical clarity, anti-block or physical properties of the sheet, while the middle layer may comprise a different thermoplastic material, and this combination may provide optical clarity, structural support, shock absorbance or simply a more cost effective end-product. It is contemplated that the surface layers and the middle layer(s) of the multi-layer sheets may be comprised of the same thermoplastic material or different thermoplastic materials.

In order to understand the embossing process of the present disclosure, it is also important to have an understanding of the surface patterns and roughness imparted to a polymer interlayer sheet by embossing, along with the scales, mechanisms and formulas by which the roughness and pattern of the surface of a polymer interlayer sheet are characterized. Generally, the end-product polymer interlayer sheets produced by the methods disclosed herein will have at least one embossed surface. An "embossed surface," as that term is used herein, is a surface upon which a certain design has been imprinted with a tool engraved with a pattern (such as an embossing roller). The pattern imprinted on the surface of the polymer interlayer is generally the negative of the pattern engraved on the tool. The embossed surface pattern of the polymer interlayer generally comprises projections upward from an imaginary plane of the flattened polymer interlayer, as well as voids, or depressions, downward from the imaginary plane in a way that the projections and depressions are of similar or the same volume, generally located in close proximity to each other. The projections and depressions on the embossed surface are the opposite of (or formed by) the depressions and projections on the embossing roller.

For a typical surface pattern, the surface roughness, or the height of particular peaks on the roughened surface from the imaginary plane of the flattened polymer interlayer sheet, is the Rz value of the surface. The surface roughness, or Rz, of the surface of a polymer interlayer sheet when described in this application will be expressed in microns ($\mu$m) as measured by a 10-point average roughness in accordance with DIN ES ISO-4287 of the International Organization for Standardization and ASME B46.1 of the American Society of Mechanical Engineers. In general, under these scales, Rz is calculated as the arithmetic mean value of the single roughness depths Rzi (*i.e.,* the vertical distance between the highest peak and the deepest valley within a sampling length) of consecutive sampling lengths:

$$Rz = \frac{1}{N} \times (R_{z1} + R_{z2} + \ldots + R_{zn})$$

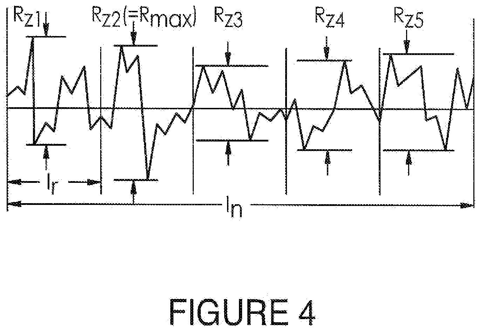

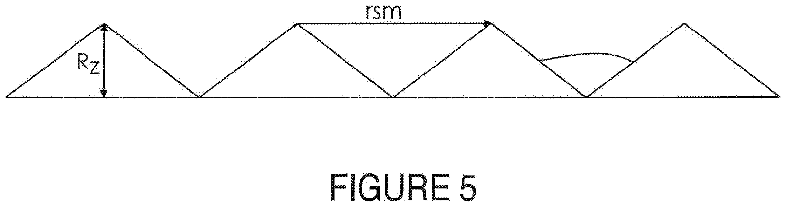

A graphical depiction of the calculation of an Rz value in accordance with DIN ES ISO-4287 of the International Organization for Standardization and ASMEB46.1 of the American Society of Mechanical Engineers is provided in FIG. 4. A graphical depiction of the Rz value (201) of a surface of a polymer interlayer sheet for a particular pattern, a sawtooth embossing pattern, is provided in FIG. 5.

Another surface parameter described and measured is the mean spacing (Rsm). The mean spacing, Rsm, describes the average width between peaks on the surface of the polymer interlayer sheet. A graphical depiction of the mean surface spacing, Rsm (202), of a surface of a polymer interlayer sheet with a sawtooth embossing pattern is provided in FIG. 5.

In general, Rz and Rsm parameters are not limited to measurements for embossed surfaces of polymer interlayer sheets. Rsm and Rz can be utilized to measure the surface typography of both embossed and non-embossed polymer interlayer sheets (non-embossed polymer interlayer sheets are also referred to as random rough sheets). It should be noted that while Rz and Rsm are utilized as values which describe the surface of a polymer interlayer sheets, these values alone do not characterize the complete profile of the surface.

Another way to describe the polymer interlayer sheets produced by the disclosed process is "permanence." Permanence is a measure of the capability of a polymer interlayer sheet to retain the entirety of its embossed pattern over time. Stated differently, permanence is a measure of how long and to what degree the surface of a polymer interlayer sheet can retain the integrity of the entire embossing pattern imparted to it by the embossing rollers. Permanence of the surface, as that term is used herein, is generally determined by the following technique. The Rz and Rsm of the polymer interlayer sheet prior to embossing (*i.e.,* the non-embossed sheet) are measured. These values are designated the Rz Base and Rsm Base. After the polymer interlayer sheet is embossed, Rsm and Rz measurements are measured on the embossed surface and are designated Rz Embossed and Rsm Embossed. Then, the polymer interlayer sheet is heated to a certain temperature for a certain fixed period of time. For example, in some embodiments, the sample polymer interlayer sheets are heated to about 100°C for five (5) minutes. It is contemplated, however, that the temperature and length of time at which a polymer interlayer sheet is heated can vary in accordance with the degree of stress desired for the particular experimentation.

In one embodiment, the sample polymer interlayer is prepared for heating in the following manner. First, a poly(ethylene terephthalate) (PET) film is placed on a wood or metal frame resting on a horizontal surface, with the periphery of the frame being slightly smaller than the PET film. The PET functions to cover the frame so that the sample polymer interlayer will not stick to the wood or metal frame during the test. Then, a portion of the sample polymer interlayer is placed on top of the PET film. Then another PET film is placed on top of the polymer interlayer. Then, a second frame is placed over the polymer/PET layers. The frames are then clamped together with clips (such as binder clips) and placed in a preheated oven for the allocated period of time. After heating, the assembly is then removed and cooled. Rz and Rsm are measured on the polymer interlayer sample after heating and designated as the Rz embossedheated and the Rsm embossedheated. The permanence of the polymer interlayer is then determined in accordance with the following formula:

$$\text{Permanence (temp/time)} = \frac{(Rsm\,/\,Rz)_{base} - (Rsm\,/\,Rz)_{embossedheated\,(100C\,/\,5\,min)}}{(Rsm\,/\,Rz)_{base} - (Rsm\,/\,Rz)_{embossed}} \times 100$$

Another parameter measured is embossed surface retention. Like permanence, embossed surface retention is a measure of how long and to what degree the surface of the polymer interlayer sheet retains an embossed pattern. Notably, in contrast to permanence, embossed surface retention focuses on the ability of the polymer interlayer sheet to retain the height of the embossed pattern. The embossed surface retention, or ER, of the polymer interlayer sheet is determined in accordance with the following formula:

$$\text{Embossed Surface Roughness Retention (temp/time)} = \frac{Rz_{embossedheated\,(temp\,/\,time)}}{Rz_{embossed}} \times 100$$

As with permanence determinations, it is contemplated that the temperature and length of time at which a polymer interlayer is heated can vary in accordance with the degree of stress desired for the particular experimentation. In some embodiments, the sample polymer interlayer is heated to about 100°C for five (5) minutes. In another embodiment, to test the polymer interlayer under more severe conditions, the polymer interlayer is heated to about 140°C for five (5) minutes or thirty (30) minutes.

Another parameter used to describe the polymer interlayers disclosed herein is the stack sticking peel force, or the amount of force necessary to peel one polymer interlayer from another polymer interlayer after the two polymer interlayers have been stacked upon one another. Stack sticking peel force is a measurement used to predict the occurrence of blocking or the degree of stack sticking of polymer interlayers. Generally, the stack sticking peel force of an embossed polymer interlayer is determined as follows. First, the sheets are conditioned at a certain temperature for a certain period of time to reach a target moisture level. For example, the polymer interlayers are conditioned (generally in a controlled environment, such as an RH chamber) at about 37.2°C for about four (4) hours to reach a target moisture level of about 0.40%. After conditioning, the polymer interlayers are cut into samples of the same size and then assembled into pairs, with each pair being separated by a polyethylene sheet. The pairs are then placed upon one another to simulate a stack used in average customer operating conditions. Generally, a minimum of eight (8) pairs and a maximum of fourteen (14) pairs are used in the test. When the stack is completed, substrate covers (any possible substrate is contemplated) are placed on top of the stack and weights will be placed on top of the substrate covers to impart an additional downward force to the stack. The stack is kept under these conditions for a set period time. In one embodiment, the stack is kept under these conditions for about sixteen (16) hours. Each sheet pair is then separated from the stack and brought to room temperature conditions. In a next step, each of the separated paired sheets are "peeled" from one another and the force required to separate the sheets is measured (as an average peel force for the sample) and the average force of all of the samples is calculated, generally in units of grams/cm.

The final parameter used to characterize the sheet and which will be measured is mottle. Mottle refers to an objectionable visual defect that manifests itself as graininess or texture in a laminated multiple layer polymer interlayer, whether or not the surface area of the polymer interlayer is embossed. Generally, based on the maximum acceptable level of mottle determined from customer feedback, the commercially acceptable mottle level is about 2.5 as measured by the Clear Mottle Analyzer (CMA).

Mottle may be measured in the following manner. First, a multiple layer panel or multiple layer polymer interlayer is held up between (generally, half way between) a light source and a white background or screen. Generally, the lighting apparatus will be a uniformly diverging light source, such as a xenon arc lamp. The light passes through the test sheet and is then projected onto a screen producing what is commonly known as a shadowgraph. Generally, as the uniformly diverging light source passes through the test sheet, the direction of the light changes as it passes through layers with different refractive indices. The direction of the light changes according to the ratio of refractive indices and the angle of the incoming light relative to the plane of the interface. If the interface plane varies due to surface non-uniformities, the angle of the refracted light will vary accordingly. The non-uniformly refracted light leads to an interference pattern resulting in a projected shadowgraph image with light and dark spots. Traditionally, the mottle of a given multiple layer test panel was assessed by a side-by-side comparison of the shadowgraph projections for the test laminate with a set of shadowgraph projections for a set of laminates having standard mottle values on a mottle scale, from 1-4 that designates the degree of mottle for a particular sample, where 1 represents low mottle and 4 represents high mottle. In the traditional system, a test panel was classified as having the mottle value of the standard laminate shadowgraph to which the test panel shadowgraph best corresponded.

Notably, this application contemplates both the traditional methods of measuring and determining mottle and the new processes and methods for measuring mottle on the CMA scale disclosed in Hurlbut, Provisional Patent Application Serial No. 61/418,253.

It is contemplated that the embossed polymer interlayer sheet product of this application can be embossed on one or both sides. The embossed surface patterns and/or depth thereof can be symmetric or asymmetric with respect to the two sides; the patterns and/or depth of the two embossed surfaces on opposite sides of the polymer interlayer sheet can be the same or different. Any particular surface pattern known to one of ordinary skill in the art is contemplated as a possible embossing pattern of the present systems. Examples of surface patterns include parallel channels, sawtooth patterns, flat-bottom patterns and channels angled at 45 degrees off the central median plane of the surface of the polymer interlayer sheet.

In one embodiment of the methods for embossing a polymer interlayer sheet described herein, as depicted in FIG. 3, the polymer interlayer sheet is embossed in a step after leaving the extruder die at an elevated temperature (it is embossed while it is still a melt). No cooling step is required or utilized to lower the temperature between the steps of extrusion from the extrusion die and embossing. Rather, the polymer melt sheet (as opposed to the cooled and set polymer interlayer sheet) is embossed in a single embossing stage in which the polymer melt sheet is fed from the extrusion die into a single set of two embossing rollers (which in some embodiments are made of steel) directly out of the extrusion die, and both sides of the polymer melt sheet are simultaneously embossed. One side of the polymer melt sheet is embossed by one of the embossing rollers and the other side of the polymer melt sheet is embossed by the other embossing roller.

Generally, in some embodiments (such as where the polymer interlayer is comprised of plasticized PVB), the temperature of the polymer melt sheet will range from about 125°C to 220°C, preferably from about 160°C to 220°C at the time of embossing. As the polymer melt sheet is embossed immediately after the polymer melt sheet comes out of the extrusion die, the temperature of the entire polymer melt sheet will generally be within the same temperature range at the time of embossing as it was when it left the extrusion die. The temperature of the entire polymer melt sheet will be within the range of about 125°C to 220°C (preferably about 160°C to 220°C) both at the time the polymer melt sheet comes out the extrusion die and at the time of embossing since essentially there is no opportunity for the polymer melt sheet to substantially cool. The temperature of the embossing rollers will generally range from about 40°C to 200°C, or in other embodiments about 150°C to 190°C, at the time of embossing. It is contemplated that the embossing rollers employed can be the same or different temperatures within this range during embossing.

While any method known to one of ordinary skill in the art is contemplated for the embossing step, embossing via a single set of two embossing rollers is the preferred method of embossing used by the disclosed methods to continuously emboss a polymer melt sheet.

In the disclosed embossing methods, the polymer melt sheet is fed through embossing rollers immediately after the polymer melt sheet leaves the extruder die; there is no intervening cooling step or meaningful opportunity for the polymer melt sheet to cool in any substantial manner to set and form a polymer interlayer sheet. The embossing rollers have a raised and depressed pattern on their surfaces which form an embossed surface pattern that is the negative imprint of the pattern on the rollers (*i.e.,* the raised portions of the embossed rollers form the depressed portions of the polymer interlayer and visa-versa). The embossing is imparted to the polymer melt sheet by the raised and depressed portions of the embossing rollers as the polymer melt sheet is fed through the embossing rollers. As the polymer melt sheet passes through embossing rollers, the force of the embossing rollers on the polymer melt sheet causes the molten polymer melt to flow into the raised and depressed portions of the rollers resulting in an embossing on the surface of the polymer melt sheet.

Upon exiting the embossing rollers, the embossed polymer melt sheet is comprised of a polymer melt sheet with at least one embossed surface imparted to it by the rollers which is substantially retained by the polymer melt sheet. Substantial retention of the embossing pattern as that term is utilized in this application means retention of most, if not all, of the embossed pattern as it is initially imprinted onto the surface. In some embodiments, the polymer melt sheet will be embossed on only one side. In other embodiments, the polymer melt sheet will be embossed on both sides.

After it leaves the embossing rollers, in a next step (as depicted in FIG. 3), the embossed polymer melt sheet may be cooled by a cooling device to form a polymer interlayer sheet. Cooling devices that could be used include, but are not limited to, spray jets, fans, cooling baths, cooling rollers or any other cooling apparatus known to those of skill in the art. After the cooling step, it is contemplated in certain embodiments that the polymer interlayer sheets produced by the present methods will be subjected to the final finishing and quality control steps for polymer interlayer manufacturing known to those of skill in the art. In some embodiments, the polymer interlayer sheet will be used in laminated glass panels or other applications.

Depending on the embossing rollers and patterns utilized, an almost endless variety of different patterns could be imparted to the polymer melt sheet in the disclosed methods. The embossing pattern on the rollers could be the same (resulting in the same embossed pattern on both sides of the polymer interlayer) or different (resulting in different embossed patterns on both sides of the polymer interlayer). The width and diameter of the embossing rollers utilized can vary depending upon the sheet width, material thickness, pattern depth, material tensile strength and hardness desired for the end product embossed polymer interlayer sheet. While engraved steel embossing rollers are contemplated in one embodiment of the disclosed embossing methods, this is in no way limiting. Rather, it is contemplated that the embossing rollers may be formed from any suitable material known in the art to create embossing rollers. In addition, any method or system for heating embossing rollers to a temperature within the embossing roller temperature range defined for the present systems is contemplated.

In one embodiment, it is contemplated that the force applied to the polymer melt sheet by the embossing rollers pressing against the sheet during embossing will be in the range of about 250 to 8929 kg/m (14 to 500 pounds per linear inch (pli)). In other embodiments, the force will be about 446 to 2679 kg/m (25 to 150 pli). Generally, this force applied to the polymer melt sheet is created by the embossing rollers pressing against the polymer melt sheet (the contact force).

In certain embodiments, it is contemplated that a partial portion or the entire surface area of the embossing rollers is coated with a lubricant which inhibits the melt of the polymer melt sheet from sticking to the surface of the embossing rollers during the embossing process. This lubricant may be a liquid lubricant added to the surface of the embossing rollers some time prior to the time of embossing or may be imparted to the surface of the rollers as a coating which has been allowed to solidify. Examples of lubricants include silicone and silicone blends, fluoro polymers, PTFE and PTFE blends and other coatings known to those of skill in the art.

In one embodiment, the Rz, or surface roughness, of the embossing rollers is within the range of about 10 to 90 microns, although the Rz may be higher in other embodiments if desired. The resultant polymer interlayer surface roughness, Rz, is generally less than or equal to the Rz of the embossing rollers used to emboss the surface. In one embodiment, the final embossed surface roughness, Rz, of the surface of the resultant polymer interlayer will be wihtin the range of about 10 to 90 microns. Generally, the amount of direct replication of the embossment pattern from each embossing roller to the corresponding polymer interlayer is determined by the temperature of the respective roller and manipulation of either the gap between the rollers or the force applied to the rollers (*i.e.,* one can manipulate the gap between the rollers to yield a certain force applied to the polymer melt sheet by the rollers or one can manipulate the force applied to the rollers to maintain a certain gap between the rollers and force on the polymer melt sheet). It is contemplated that surface roughness of the polymer melt sheet exiting the extrusion die immediately prior to embossing will have an Rz value of 0 to 80 microns.

Generally, any pattern known to one of ordinary skill in the art is contemplated for the embossed surface of the polymer interlayer sheets. It is contemplated that the pattern on the embossing rollers can be varied and tailored for the specific application in order to achieve the optimal deairing properties and to diminish mottle.

In embodiments of the disclosed methods in which a multi-layer polymer melt is embossed, embossing can be imparted to one or both of the polymer layers on the surfaces of the multi-layer polymer melt. In this embodiment, embossing can be imparted to the surfaces of the multi-layer polymer melt without substantially affecting the polymer interlayers sandwiched therebetween.

The improvements of the presently disclosed methods for embossing a polymer interlayer (designated as the "Disclosed Process") can be most readily appreciated by a comparison to the Conventional Processes. In the following examples, exemplary polymer interlayers produced by the Disclosed Process were tested for permanence, mottle, stack sticking and embossed surface retention and compared to polymer interlayers produced by the Conventional Processes. These examples demonstrate the increased permanence and embossed surface retention, along with other advantageous qualities, of the embossed surfaces and method of the Disclosed Process.

In order to gain a broader understanding of this comparative testing, the Conventional Process against which the Disclosed Process is compared will be briefly described. As seen in FIGs. 1 and 2, in the Conventional Process, after the polymer melt sheet leaves the extrusion die, it is cooled to form a polymer interlayer sheet in a cooling step.

Generally, the entirety of the polymer melt sheet is cooled below 90°C, 80°C, 70°C, or 60°C in order to set the polymer melt sheet into a polymer interlayer sheet. After the cooling step, the polymer interlayer sheet is fed into an embossing station comprising an embossing roll and a rubber-faced backup roll. During or prior to embossing, the surface of the polymer interlayer sheet is reheated generally by the heated embossing roll. The embossing roller is heated to a desired temperature, for example, about 121°C to about 232°C, about 138°C to about 216°C and about 149°C to about 204°C by the presence of an appropriate heating mechanism beneath the embossing surface. The heated embossing roller then heats the surface, not the entirety, of the polymer interlayer sheet to a desired temperature, for example, about 121°C to about 232°C, about 138°C to about 216°C and about 149°C to about 204°C. In this Conventional Process, embossing two sides of the polymer interlayer sheet can be accomplished by running the polymer interlayer sheet between a second embossing roller/rubber roller set subsequently or by passing the polymer interlayer sheet through the same embossing roller/rubber roller set a second time.

The results of the following examples demonstrate the following advantages of the Disclosed Process over the Conventional Process: 1) higher embossed surface retention ("ER") values for the Disclosed Process, even tested in severe conditions; 2) higher permanence values; 3) improved roll blocking/stack sticking-*i.e.*, lower peel forces are needed to separate stacked layers; and 4) improved (less) mottle.

In each of the examples, mottle, stack sticking peel force, permanence and embossed surface retention were measured on a non-embossed sheet (*i.e.,* a sheet having a random rough surface formed by melt fracture with no subsequent embossing) ("NE"), an embossed sheet of the Conventional Process ("CP") and an embossed sheet of the Disclosed Process ("DP").

EXAMPLE 1

Table 1

| Sample | Embossing Roller Pattern | Measurements of Embossing on Polymer Side 1 | Measurements of Embossing on Polymer Side 2 | Mottle (CMA) | Permanence Measured at 100°C for 5 minutes | Embossed Surface Retention 100°C for 5 minutes |
|---|---|---|---|---|---|---|
| NE A | -- | Rz: 14 Rsm: 528 | Rz: 13 Rsm: 465 | 0.2 | | |
| CP A | Rz: 90 Rsm: 249 | Rz: 56 Rsm: 298 | Rz: 57 Rsm: 294 | 0.3 | 96 | 82 |
| DP A | Rz: 90 Rsm: 249 | Rz: 64 Rsm: 271 | Rz: 44 Rsm: 286 | 0 | 100 | 97 |
| | | | | | | |
| NE B | -- | Rz: 37 Rsm: 830 | Rz: 37 Rsm: 889 | 3.3 | | |
| CP B | Rz: 90 Rsm: 249 | Rz: 49 Rsm: 313 | Rz: 50 Rsm: 367 | 2.0 | 69 | 86 |
| DP B | Rz: 90 Rsm: 249 | Rz: 74 Rsm: 288 | Rz: 64 Rsm: 280 | 1.5 | 101 | 102 |
| | | | | | | |
| NE C | -- | Rz: 49 Rsm: 910 | Rz: 50 Rsm: 868 | 5.2 | | |
| CP C | Rz: 90 Rsm: 249 | Rz: 57 Rsm: 323 | Rz: 58 Rsm: 364 | 3.0 | 58 | 88 |
| DP C | Rz: 90 Rsm: 249 | Rz: 74 Rsm: 285 | Rz: 65 Rsm: 272 | 0.7 | 101 | 102 |

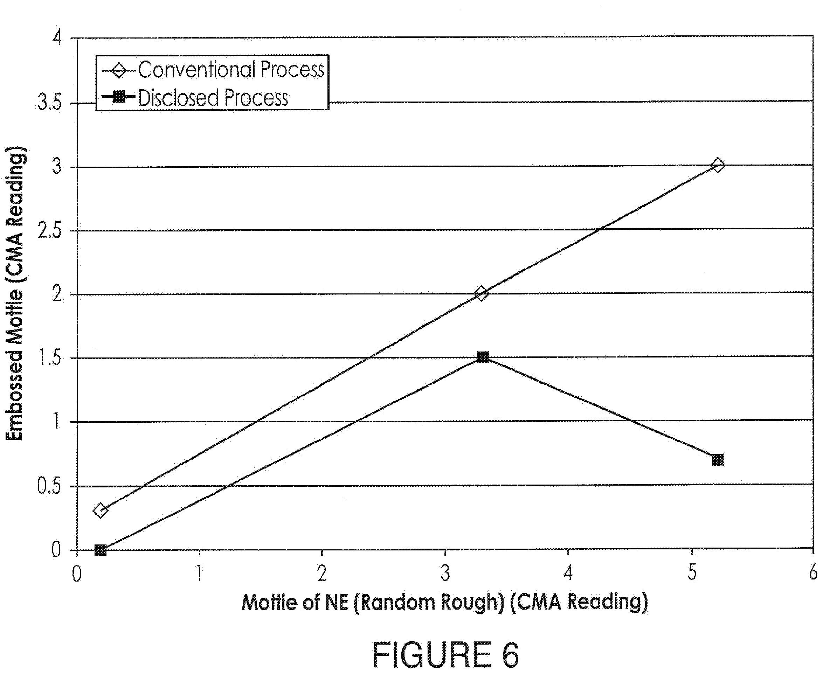

Example 1 demonstrates that the Disclosed Process consistently has better permanence and embossed surface retention (higher values) of the embossed surfaces regardless of the original surface roughness of the sheet. In this Example, "A" "B" and "C" represent test sheets with different roughness values as formed directly out of the extrusion die. Each of these test sheets, having different starting non-embossed surfaces with different roughness values were then embossed via both the Disclosed Process and the Conventional Process. The results in Table 1 show that the Disclosed Process consistently had significantly increased permanence and embossed surface retention values compared to polymer interlayer sheets embossed by the Conventional Process. This increase in permanence and embossed surface retention is retained over the different samples with different original surface roughness values. Table 1 also shows that polymer interlayer sheets embossed by the Disclosed Process consistently achieve very good optical properties, including a mottle value of 1.5 or lower as measured by the CMA. A graphical depiction of this comparison in mottle values for the samples tested in Table 1 is depicted in FIG. 6.

EXAMPLE 2

Table 2

| Sample | Embossing Roller Pattern | Measurements of Embossing on Polymer Side 1 | Measurements of Embossing on Polymer Side 2 | Mottle (CMA) | Embossed Surface Retention 100°C for 5 minutes | Embossed Surface Retention 140°C for 5 minutes | Stack Sticking Peel Force (g/cm) |
|---|---|---|---|---|---|---|---|
| NE | -- | Rz: 13 Rsm: 365 | Rz: 13 Rsm: 398 | 1.00 | 103 | 104 | 807 |
| CP X | Rz: 90 Rsm: 249 | Rz: 54 Rsm: 285 | Rz: 54 Rsm: 287 | .60 | 72 | 49 | 59 |
| CP Y | Rz: 90 Rsm: 249 | Rz: 52 Rsm: 292 | Rz: 51 Rsm: 288 | .60 | 69 | 52 | 64 |
| CP Z | Rz: 90 Rsm: 249 | Rz: 48 Rsm: 294 | Rz: 47 Rsm: 282 | .73 | 65 | 49 | 70 |
| DP | Rz:90 Rsm: 249 | Rz:61 Rsm: 290 | Rz:54 Rsm: 275 | .19 | 101 | 90 | 23 |

Table 2 depicts a comparison of a non-embossed sheet and a sheet embossed by the Disclosed Process with sheets embossed by the Conventional Processes ("X" "Y" and "Z") for which the process variables of line speed, embossing roller temperature and force applied to the sheet by the rollers were varied in an attempt to attain the same measured embossed values as those obtained on the sheet formed by the Disclosed Process. Embossed surface retention of the samples was measured at the standard conditions (100°C for five minutes) and at more severe or extreme conditions (140°C for five minutes). The samples were also tested for stack sticking peel force. As shown in Table 2, the Disclosed Process polymer interlayer sheet had a significantly higher embossed surface retention at both standard and more extreme test conditions. The sample of the polymer interlayer embossed by the Disclosed Process also had a better stack sticking peel force value (*i.e.,* less force was required to separate the sheets) and had a significantly lower incidence of mottle than the polymer interlayer sheets embossed by the Conventional Process.

EXAMPLE 3

Table 3

| Sample | Rz | Embossed Surface Retention 140°C for 30 minutes |
|---|---|---|
| NE | 13 | 94 |
| CP | 53 | 40 |
| DP | 54 | 77 |

Table 3 depicts the results from comparison testing at the extreme testing conditions for embossed surface retention (140°C for thirty (30) minutes). As shown in Table 3, the embossed surface retention value for the Disclosed Process is significantly higher than that of the Conventional Process even in extreme testing conditions and closer to non-embossed (random rough) surfaces.

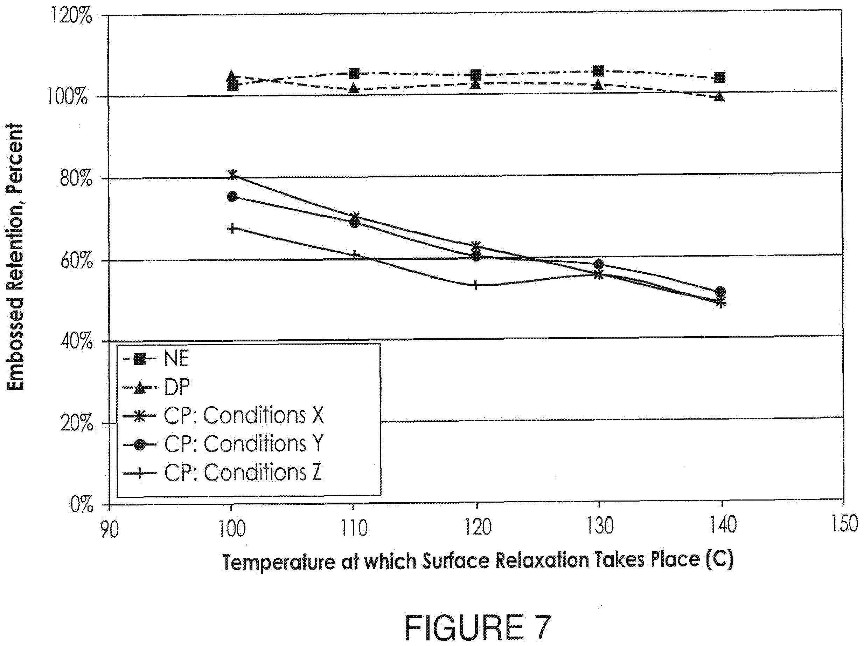

The improved embossed surface retention values of various polymer interlayer sheets embossed by the Disclosed Process in comparison to the Conventional Process over multiple testing conditions is graphically depicted in FIG 7. FIG. 7 provides a line graph of comparative embossed surface retention values for multiple different samples of polymer interlayers embossed by the Disclosed Process and the Conventional Process. As can be seen in FIG. 7, no matter the sheet tested or the process variables manipulated, the polymer sheets embossed by the Disclosed Process all have embossed surface retention values which are consistently significantly higher than the embossed surface retention values of the polymer sheets embossed by the Conventional Processes.

In conclusion, the continuous single-stage embossing station described herein located after the extrusion die and before a cooling step in the manufacturing process for polymer interlayer sheets has numerous advantages over the embossing processes previously utilized in the art. In general, employment of this process results in decreased energy costs for manufacturing of polymer interlayers, decreased space and footprint requirements and increased efficiency and overall output. In addition to these benefits, in comparison to polymer interlayer sheets embossed by processes previously utilized in the art, the processes described herein produces polymer interlayer sheets with decreased incidence of mottle, higher permanence and embossed retention values and improved roll and stack sticking.

While the invention has been disclosed in conjunction with a description of certain embodiments, including those that are currently believed to be the preferred embodiments, the detailed description is intended to be illustrative and should not be understood to limit the scope of the present disclosure. As would be understood by one of ordinary skill in the art, embodiments other than those described in detail herein are encompassed by the present invention. Modifications and variations of the described embodiments may be made without departing from the scope of the invention.

**Claims**

1. An embossed polymer interlayer sheet, the embossed polymer interlayer sheet comprising:

   a first side;
   a second side opposing the first side; and
   an embossed surface on at least one of the sides;
   wherein the embossed polymer interlayer sheet has a surface roughness Rz of 10 to 90 microns on the embossed surface, measured as described in the description;
   wherein the embossed polymer interlayer sheet has a permanence of greater than 95% when tested at 100°C. for five minutes, measured as described in the description;
   wherein the embossed polymer interlayer sheet has an embossed surface retention of greater than 70% when tested at 140°C for five minutes, measured as described in the description;
   and wherein the embossed polymer interlayer sheet is comprised of plasticized polyvinyl butyral.

2. The embossed polymer interlayer sheet of claim 1, wherein the embossed polymer interlayer sheet has a stack sticking peel force of less than 50 g/cm, measured as described in the description.

3. The embossed polymer interlayer sheet of claim 1, wherein the embossed polymer interlayer sheet is further comprised of one or more additives chosen from the group consisting of: dyes, pigments, stabilizers, antioxidants, anti-blocking agents, flame retardants, IR absorbers, processing aides, flow enhancing additives, lubricants, impact modifiers, nucleating agents, thermal stabilizers, UV absorbers, UV stabilizers, dispersants, surfactants, chelating agents, coupling agents, adhesives, primers, reinforcement additives, and fillers.

4. The embossed polymer interlayer sheet of claim 1, wherein the embossed polymer interlayer sheet is comprised of multiple polymer layers between said first side and said second side, creating an embossed multi-layer polymer interlayer.

5. The embossed multi-layer polymer interlayer sheet of claim 4, wherein the embossed multi-layer polymer interlayer sheet has a mottle value of less than 1.5 as measured by the CMA (Clear Mottle Analyzer).

6. The embossed multi-layer polymer interlayer sheet of claim 4, wherein the embossed multi-layer polymer interlayer sheet has a mottle value of less than 2.5 as measured by the CMA (Clear Mottle Analyzer).

7. An embossed polymer interlayer sheet according to claim 1, said embossed polymer interlayer sheet being obtainable by a process which comprises the steps of:

extruding a polymer melt sheet;
after the extruding, embossing said polymer melt sheet in a single embossing stage; and
after the embossing, cooling said polymer melt sheet to form a polymer interlayer sheet.

8. A method for generating an embossed polymer interlayer sheet, wherein the embossed polymer interlayer sheet is comprised of plasticized polyvinyl butyral, the method comprising:

extruding a polymer melt sheet;
after the extruding, embossing said polymer melt sheet in a single embossing stage with embossing rollers, at least a partial portion or the entire surface area of which is coated with a lubricant which inhibits the melt of the polymer melt sheet from sticking to the surface of the embossing rollers during the embossing process; and
after the embossing, cooling said polymer melt sheet to form a polymer interlayer sheet, wherein, after the cooling, the polymer interlayer sheet retains substantially all of the embossing applied to the polymer melt sheet.

9. The method of claim 8, wherein the temperature of the polymer melt sheet is 160°C to 220°C during the embossing.

10. The method of claim 8, wherein the polymer interlayer sheet has an Rz of 10 to 90 microns.

11. The method of claim 8, wherein the polymer interlayer sheet has a permanence of greater than 95% when tested at 100°C for five minutes, measured as described in the description.

12. The method of claim 8, wherein the polymer interlayer sheet has an embossed retention of greater than 70% when tested at 140°C for five minutes, measured as described in the description.

13. The method of claim 8, wherein the polymer melt sheet is embossed in the single embossing stage with a single set of embossing rollers.

14. The method of claim 8, wherein both sides of the polymer melt sheet are embossed simultaneously in the single embossing stage.

15. The method of claim 8, wherein the polymer interlayer sheet is a multi-layer polymer interlayer.


**Patentansprüche**

1. Geprägte Polymer-Zwischenschichtfolie, wobei die geprägte Polymer-Zwischenschichtfolie Folgendes umfasst:

eine erste Seite;
eine zweite Seite gegenüber der ersten Seite; und
eine geprägte Oberfläche auf mindestens einer der Seiten;
wobei die geprägte Polymer-Zwischenschichtfolie eine Oberflächenrauigkeit Rz von 10 bis 90 Mikrometer auf der geprägten Oberfläche, gemessen wie in der Beschreibung beschrieben, aufweist;
wobei die geprägte Polymer-Zwischenschichtfolie eine Beständigkeit von mehr als 95 % im Test bei 100 °C für fünf Minuten hat, gemessen wie in der Beschreibung beschrieben;
wobei die geprägte Polymer-Zwischenschichtfolie eine Retention der geprägten Oberfläche von mehr als 70 % im Test bei 140 °C für fünf Minuten aufweist, gemessen wie in der Beschreibung beschrieben;
und wobei die geprägte Polymer-Zwischenschichtfolie plastifiziertes Polyvinylbutyral umfasst.

2. Geprägte Polymer-Zwischenschichtfolie nach Anspruch 1, wobei die geprägte Polymer-Zwischenschichtfolie eine Stapel-Haft-Löse-Kraft von weiniger als 50 g/cm hat, gemessen wie in der Beschreibung beschrieben.

3. Geprägte Polymer-Zwischenschichtfolie nach Anspruch 1, wobei die geprägte Polymer-Zwischenschichtfolie ferner ein oder mehrere Additive umfasst, ausgewählt aus der Gruppe, bestehend aus: Farbstoffen, Pigmenten, Stabilisatoren, Antioxidationsmitteln, Antiblockmitteln, Flammverzögerungsmitteln, IR-Absorbern, Verarbeitungshilfsmitteln, Fließverbesserungsadditiven, Schmiermitteln, Schlagzähigkeitsmodifizierern, Keimbildnern, Wärmestabilisatoren, UV-Absorbern, UV-Stabilisatoren, Dispergiermitteln, oberflächenaktiven Mitteln, Chelatbildnern, Haftvermittlern, Haftmitteln, Primern, Verstärkeradditiven und Füllstoffen.

4. Geprägte Polymer-Zwischenschichtfolie nach Anspruch 1, wobei die geprägte Polymer-Zwischenschichtfolie mehrere Polymerschichten zwischen der ersten Seite und der zweiten Seite umfasst, wodurch eine geprägte Mehrschicht-Polymer-Zwischenschichtfolie geschaffen wird.

5. Geprägte Mehrschicht-Polymer-Zwischenschichtfolie nach Anspruch 4, wobei die geprägte Mehrschicht-Polymer-Zwischenschichtfolie einen Körnigkeitswert von weniger als 1,5 aufweist, gemessen mit dem CMA (Clear Mottle Analyzer).

6. Geprägte Mehrschicht-Polymer-Zwischenschichtfolie nach Anspruch 4, wobei die geprägte Mehrschicht-Polymer-Zwischenschichtfolie einen Körnigkeitswert von weniger als 2,5 aufweist, gemessen mit dem CMA (Clear Mottle Analyzer).

7. Geprägte Polymer-Zwischenschichtfolie nach Anspruch 1, wobei die geprägte Polymer-Zwischenschichtfolie durch einen Prozess erhältlich ist, der die folgenden Schritte umfasst:

Extrudieren einer Polymerschmelzen-Folie;
nach dem Extrudieren, Prägen der Polymerschmelzen-Folie in einer einzigen Prägestufe;
und
nach dem Prägen, Abkühlen der Polymerschmelzen-Folie unter Bildung einer Polymer-Zwischenschichtfolie.

8. Verfahren zum Erzeugen einer geprägten Polymer-Zwischenschichtfolie, wobei die geprägte Polymer-Zwischenschichtfolie plastifiziertes Polyvinylbutyral umfasst, wobei das Verfahren Folgendes umfasst:

Extrudieren einer Polymerschmelzen-Folie;
nach dem Extrudieren, Prägen der Polymerschmelzen-Folie in einer einzigen Prägestufe mit Prägewalzen, von denen zumindest ein Teilabschnitt oder der gesamte Oberflächenbereich mit einem Schmiermittel beschichtet ist, welches verhindert, dass die Schmelze der Polymerschmelzen-Folie während des Prägeprozesses an der Oberfläche der Prägewalzen klebt;
und
nach dem Prägen, Abkühlen der Polymerschmelzen-Folie unter Bildung einer Polymer-Zwischenschichtfolie, wobei nach dem Abkühlen die Polymer-Zwischenschichtfolie im Wesentlichen die gesamte auf die Polymerschmelzen-Folie aufgebrachte Prägung beibehält.

9. Verfahren nach Anspruch 8, wobei die Temperatur der Polymerschmelzen-Folie während des Prägens 160 °C bis 220 °C beträgt.

10. Verfahren nach Anspruch 8, wobei die Polymer-Zwischenschichtfolie eine Rz von 10 bis 90 Mikrometer hat.

11. Verfahren nach Anspruch 8, wobei die Polymer-Zwischenschichtfolie eine Beständigkeit von mehr als 95 % im Test bei 100 °C für fünf Minuten hat, gemessen wie in der Beschreibung beschrieben.

12. Verfahren nach Anspruch 8, wobei die Polymer-Zwischenschichtfolie eine Retention der geprägten Oberfläche von mehr als 70 % im Test bei 140 °C für fünf Minuten aufweist, gemessen wie in der Beschreibung beschrieben.

13. Verfahren nach Anspruch 8, wobei die Polymerschmelzen-Folie in der einzelnen Prägestufe mit einem einzigen Satz Prägewalzen geprägt wird.

14. Verfahren nach Anspruch 8, wobei beide Seiten der Polymerschmelzen-Folie gleichzeitig in der einzelnen Prägestufe geprägt werden.

15. Verfahren nach Anspruch 8, wobei die Polymer-Zwischenschichtfolie eine Mehrschicht-Polymer-Zwischenschichtfolie ist.

**Revendications**

1.  Feuille de polymère embossée formant une couche de liaison intercouche, la feuille de polymère embossée formant une couche de liaison intercouche comprenant :

    une première face ;
    une deuxième face opposée à la première ; et
    une surface embossée sur au moins une des faces ;
    dans laquelle la feuille de polymère embossée formant une couche de liaison intercouche présente une rugosité de surface Rz de 10 à 90 microns sur la surface embossée, mesurée comme décrit dans la description ;
    dans laquelle la feuille de polymère embossée formant une couche de liaison intercouche présente une permanence supérieure à 95 % lorsque testée à 100 °C pendant cinq minutes, mesurée comme décrit dans la description ;
    dans laquelle la feuille de polymère embossée formant une couche de liaison intercouche présente une rétention de surface embossée supérieure à 70 % lorsque testée à 140 °C pendant cinq minutes, mesurée comme décrit dans la description ;
    et dans laquelle la feuille de polymère embossée formant une couche de liaison intercouche est constituée de butyral de polyvinyle plastifié.

2.  Feuille de polymère embossée formant une couche de liaison intercouche selon la revendication 1, dans laquelle la feuille de polymère embossée formant une couche de liaison intercouche présente une force d'adhérence d'empilement inférieure à 50 g/cm, mesurée comme décrit dans la description.

3.  Feuille de polymère embossée formant une couche de liaison intercouche selon la revendication 1, dans laquelle la feuille de polymère embossée formant une couche de liaison intercouche comprend en outre un ou plusieurs additifs choisis dans le groupe constitué des éléments suivants : colorants, pigments, stabilisants, antioxydants, agents anti-bloquants, retardateurs de flamme, absorbeurs IR, aides au traitement, additifs améliorant le flux, lubrifiants, modificateurs d'impact, agents nucléants, stabilisants thermiques, absorbeurs UV, stabilisants UV, agents de dispersion, tensioactifs, agents chélateurs, agents de couplage, adhésifs, amorces, additifs de renforcement, et charges.

4.  Feuille de polymère embossée formant une couche de liaison intercouche selon la revendication 1, dans laquelle la feuille de polymère embossée formant une couche de liaison intercouche comprend de multiples couches polymères entre ladite première face et ladite deuxième face, formant une polymère embossée multicouches formant une couche de liaison intercouche.

5.  Feuille de polymère embossée multicouches formant une couche de liaison intercouche, selon la revendication 4, dans laquelle la feuille de polymère embossée multicouches formant une couche de liaison intercouche présente une valeur de marbrure inférieure à 1,5 telle que mesurée par l'analyseur de marbrure claire CMA (pour Clear Mottle Analyzer en anglais).

6.  Feuille de polymère embossée à multicouches formant une couche de liaison intercouche, selon la revendication 4, dans laquelle la feuille de polymère embossée à multicouches formant une couche de liaison intercouche présente une valeur de marbrure inférieure à 2,5 telle que mesurée par l'analyseur de marbrure claire CMA (pour Clear Mottle Analyzer en anglais).

7.  Feuille de polymère embossée formant une couche de liaison intercouche selon la revendication 1, ladite feuille de polymère embossée formant une couche de liaison intercouche pouvant être obtenue par un procédé qui comprend les étapes consistant à :

    extruder une feuille de polymère à l'état fondu ;
    après l'extrusion, embosser ladite feuille de polymère à l'état fondu en une seule étape d'embossage ; et
    après l'embossage, refroidir ladite feuille de polymère à l'état fondu pour former une feuille de polymère formant une couche de liaison intercouche.

8.  Procédé pour générer une feuille de polymère embossée formant une couche de liaison intercouche, dans lequel la feuille de polymère embossée formant une couche de liaison intercouche comprend du butyral de polyvinyle plastifié, le procédé comprenant les étapes consistant à :

extruder une feuille de polymère à l'état fondu ;

après l'extrusion, embosser ladite feuille de polymère à l'état fondu en une seule étape d'embossage avec des cylindres d'embossage, dont au moins une partie ou la totalité de la surface est revêtue d'un lubrifiant qui inhibe la fusion de la feuille de polymère à l'état fondu de coller à la surface des cylindres d'embossage pendant le processus d'embossage ;

et

après l'embossage, refroidir ladite feuille de polymère à l'état fondu pour former une feuille de polymère formant une couche de liaison intercouche, où, après le refroidissement, la feuille de polymère formant une couche de liaison intercouche conserve sensiblement tout de l'embossage appliqué à la feuille de polymère à l'état fondu.

9. Procédé selon la revendication 8, dans lequel la température de la feuille de polymère à l'état fondu est comprise entre 160 °C et 220 °C pendant l'embossage.

10. Procédé selon la revendication 8, dans lequel la feuille de polymère formant une couche de liaison intercouche présente un Rz de 10 à 90 microns.

11. Procédé selon la revendication 8, dans lequel la feuille de polymère formant une couche de liaison intercouche présente une permanence supérieure à 95 % lorsqu'elle est testée à 100 °C pendant cinq minutes, mesurée comme décrit dans la description.

12. Procédé selon la revendication 8, dans lequel la feuille de polymère formant une couche de liaison intercouche présente une rétention en relief supérieure à 70 % lorsqu'elle est testée à 140 °C pendant cinq minutes, mesurée comme décrit dans la description.

13. Procédé selon la revendication 8, dans lequel la feuille de polymère à l'état fondu est embossée en une seule étape d'embossage avec un seul jeu de cylindres d'embossage.

14. Procédé selon la revendication 8, dans lequel les deux faces de la feuille de polymère à l'état fondu sont embossées simultanément lors de l'étape d'embossage unique.

15. Procédé selon la revendication 8, dans lequel la feuille de polymère formant une couche de liaison intercouche est une couche de polymère à multicouches formant une couche de liaison intercouche.

FIGURE 1
(PRIOR ART)

## FIGURE 2
### (PRIOR ART)

EP 2 646 248 B1

EP 2 646 248 B1

EXTRUDER
103

DIE
109

EMBOSSER

COOL
SECTION

TRANSPORT

WARM SECTION
(OPTIONAL)

INSPECTION
(QC)

CHILL
SECTION

WINDER

CAMERS

## FIGURE 3

# FIGURE 4

FIGURE 5

EP 2 646 248 B1

FIGURE 6

FIGURE 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61418275 B
- US 13069121 B
- US 4671913 A, Gen
- EP 1646488 A, Holger
- US 20080017241 A1
- WO 61418253 A